# EUROPEAN PATENT APPLICATION

(11) **EP 1 880 600 A1**
(43) Date of publication of application: **23.01.2008**
(21) Application number: 06253803.8
(22) Date of filing: 20.07.2006
(51) Int. Cl.: A01G 31/00

(54) **Growth substrates, their production and their use**

(71) Applicant: Rockwool International A/S, 2640 Hedehusene (DK)
(72) Inventor: The designation of the inventor has not yet been filed
(74) Representative: Samuels, Lucy Alice

(57) **Abstract**

The invention provides a process of producing a mineral wool growth substrate comprising providing a charge of solid mineral material, melting the mineral material to form a melt, forming fibres from the melt and collecting the fibres as a primary web, and consolidating the primary web, the process comprising applying to the fibres, after formation and before collection, binder and wetting agent, wherein the wetting agent comprises ionic surfactant, characterised in that substantially no polyol is applied to the fibres after formation and before collection.

## Description

The invention relates to processes for the production of growth substrates. The growth substrates produced comprise a binder, often a hydrophobic binder, to provide structural integrity, and a wetting agent which provides water handling characteristics to the product.

it has been known for many years to grow plants in growth substrates formed from mineral wool. Mineral wool products which are provided as a coherent plug, block, slab or mat/blanket generally include a binder, usually an organic binder, in order to provide structural integrity to the product and such binders are commonly hydrophobic once cured. This allows the growth substrate to retain its structure during water irrigation, even during use over a period of more than a year. However, mineral wool products which are to be used as growth substrates must have a capacity to take up and hold water, which is routinely supplied by an irrigation system to the growth substrate, and re-wetting properties. Accordingly, it has been well known for some years to include a wetting agent/surfactant in mineral wool products which are to be used as growth substrates.

One early example of this is GB-A-1336426, which describes readily wettable mineral wool products suitable for use as growth substrates. To provide structure and shape, the fibres contain a binder such as a phenol formaldehyde resin or urea formaldehyde resin. To provide the required water-holding characteristics the product also contains a wetting agent, in an amount of up to 2% by weight based on the mineral wool. General classes of wetting agents are mentioned, such as anionic and cationic wetting agents, but non-ionic wetting agents are said to be preferred. Indeed, the preferred wetting agents are said to be alkaryl polyglycol ethers such as Triton CF10 (which is exemplified) and Lissapol N. These are said to be such that their wetting ability is reduced when subject to elevated temperatures, such as 200°C in the curing oven through which the mineral wool is passed in order to cure the resin binder, but still to give an adequate final wetting ability. Other materials are apparently suggested in the context of mineral wool products which are made by a method which does not involve curing at elevated temperatures. These include lauryl alcohol.

An example is given in which a mineral melt was produced and fiberised and carried in air to an air-pervious conveyor, to produce a mineral wool blanket. Whilst airborne the fibres were coated with phenol formaldehyde binder, sprayed on as an aqueous solution. The fibres are also coated with an aqueous solution of Triton CF10 wetting agent at the same time. The product is subsequently cured.

Subsequent publications, and the commercial field itself, have generally followed this preferred approach. For instance, EP-A-889175, DE-A-4208733, WO 92/04824 and DE-A-4024727 all describe systems in which a wetting agent/surfactant is included in the mineral wool substrate. In these cases, the nature of the wetting agent is either unspecified or is stated to be a non-ionic material, as in GB-A-1336426. In commercial practice levels of up to 3% non-ionic surfactant (by weight based on weight of substrate) are normally used.

Whilst the inclusion of binder and wetting agent as described in GB-A-1336426 is generally very helpful, it has certain problems. The first is that the water-handling capabilities of the substrate, although good, show room for improvement. Thus, it would be desirable to provide systems which show improved re-saturation properties (ability of the growth substrate to take up water a second time once it has been wetted then dried), improved water distribution properties (ability of the growth substrate to hold water at a more uniform concentration throughout the height of the growth substrate rather than concentrating at the base), and water retention. The substrate should be able to take up water fast.

Additionally, one problem which tends to arise with the non-ionic surfactants which have conventionally been used is that they are, during irrigation of the growth substrate, gradually lost from the growth substrate rather than being retained in the mineral wool structure. This means that the wettability properties of the growth substrate gradually decrease over time. This can have an impact on, for instance, the re-saturation properties and also on the water-handling properties of a substrate which has been in place for a considerable time, and thus on the performance of the plants and growing process.

EF-A-1226749 discloses a process for the production of water-absorbing mineral fibre products, which can be used for growing plants. According to this process, during production of the fibres, material is applied to the fibres after formation and before collection, comprising binder, wetting agent and aliphatic polyols. The binder can be a conventional phenol-based resin. The polyol can preferably be ethylene glycol, propylene glycol or trimethylol propane. The wetting agent can be selected from a long list including salts of higher fatty acids, alkyl or aralkyl sulphates or sulphonates, fatty alcohol sulphates, alkyl phosphates, fatty alcohol ethoxylates, alkyl phenol ethoxylates, fatty amine ethoxylates, fatty acid ethoxylates, alkyl ammonium compounds. Alkyl benzene sulphonate is said to be preferred. No reason is given for this preference.

According to the disclosure of EP-A-1226749, it is essential to include the polyol in the binder solution when spraying the binder onto the fibres. The wettability and water uptake capacity of the final product are said to be influenced by the polyalcohol, despite the fact that it decomposes or evaporates in the curing oven.

However, we have found that significant problems exist when attempting to implement this teaching. Specifically, when the fibre formation process is under way, especially when it is carried out using a cascade spinner comprising at least two, usually four, rotors mounted on a horizontal axis and arranged to receive melt on their outer surface and flinging melt from that surface as fibres, the presence of polyol in the spinning chamber, as taught to be essential in EP-A-1226749, results in significant emission problems from the spinning chamber. This results in significant processing problems. Emission control is a complicated and expensive process and requires significant equipment and control processes.

Emissions of organic components are increased and emissions of polyol can even be above levels permitted by regulation, when used at the levels and ratios recommended in EP-A-1226749. This is contrary to the general aim of industry to reduce emissions.

Trimethylol propane in particular has very strict emission limits and has the additional problem that it is likely to be decomposed into plant toxic compounds during the curing process.

As a result of investigation of this problem we have found, surprisingly, that when the wetting agent used is an ionic surfactant, especially an anionic surfactant such as linear alkyl benzene sulphonate, it is not, in fact, necessary to blend polyol with the binder solution.

Thus, according to the invention we provide a process of producing a mineral wool growth substrate comprising
providing a charge of solid mineral material, melting the mineral material to form a melt, forming fibres from the melt and collecting the fibres as a primary web, and consolidating the primary web,
the process comprising applying to the fibres, after formation and before collection, binder and wetting agent, wherein the wetting agent comprises ionic surfactant,
characterised in that substantially no polyol is applied to the fibres after formation and before collection.

We have found that in the context of processes where the wetting agent is an ionic surfactant, the presence of polyol can be dispensed with and the emission problems discussed above can be overcome. This has the benefit that the growth substrate can be made using conventional apparatus already set up for production of growth substrate products, and is contrary to the entire teaching of EP-A-1226749.

There are also further benefits, not suggested in EP-A-1226749, in the product itself when the wetting agent is an ionic surfactant. We have found, unexpectedly, that ionic surfactant materials show considerable benefits over the non-ionic - surfactants which have been conventionally used for many years. In particular, water handling properties are consistently better in all respects than a combination of binder and conventional non-ionic surfactant based wetting agent. They are even better in particular respects than specialist systems comprising hydrophilic binder materials, such as those described in WO99/38372.

Furthermore, the choice of ionic, especially anionic surfactant, especially linear alkyl benzene sulphonate (LAS), appears to lead to greatly reduced loss of wetting agent during irrigation and consequently minimises foaming problems during the irrigation process. LAS also has the advantage of being aerobically biodegradable in water.

This type of wetting agent increases hydroretentivity (conventional non-ionic surfactants allow water to be taken up by the substrate but do not hold it as well as the surfactants used in the invention).

We also find, contrary to the suggestion in GB-A-1336426 that non-ionic surfactants are to be preferred if the product is to be subject to curing, that ionic surfactants, in particular LAS, show no reduction in their wetting properties even on subjection to the high temperatures in the curing oven.

The growth substrate produced is formed of mineral wool, which can be glass wool or slag wool but is usually stone wool. In general it can be any of the types of man-made vitreous fibre which are conventionally known for production of growth substrates. Fibre diameter is often in the range 3 to 20 microns, preferably 5 to 10 µm, as is conventional.

Density of the block of growth substrate can be up to 200 kg/m³ but is generally in the range 10 to 150 kg/m³, often in the range 30 to 100 kg/m³, preferably in the range 35 to 90 kg/m³. It can be at least 45kg/m3.

The mineral wool growth substrate produced comprises a binder, usually an organic binder, which is generally heat-curable. The growth substrate is preferably a coherent matrix of mineral fibres connected by cured binder. The invention is particularly valuable when the binder is an organic hydrophobic binder, and in particular when it is a conventional heat-curable (thermosetting), hydrophobic binder of the type which has been used for many years in mineral wool growth substrates (and other mineral wool based products). This has the advantage of convenience and economy. Thus, the binder is preferably a phenol formaldehyde resin or urea formaldehyde resin, in particular phenol urea formaldehyde (PUF) resin.

The binder is generally present in the mineral wool growth substrate in amounts of from 0.1 to 10% based on the substrate, usually 0.5 to 5%, most preferably 1.5 to 5%.

Binder is provided in the substrate by application of binder components to the fibres during the process of producing the product. Usually, as is conventional, curable components are applied to the fibres during formation of the mineral fibre web and this is subjected to elevated temperature in order to cure the binder components and produce the binder itself in the final product. Further details are given below.

The mineral wool growth substrate also comprises a wetting agent which is an ionic surfactant.

Preferably it is an anionic surfactant. Suitable anionic surfactants include salts (including, for example, sodium, potassium, ammonium and substituted ammonium salts such as mono-,di- and triethanolamine salts) of the anionic sulphate, sulphonate, carboxylate and sarcosinate surfactants. Other anionic surfactants include isethionates such as the acyl isethionates, N-acyl taurates, fatty acid amines of methyl tauride, alkyl succinates and sulfosuccinates, mono esters of sulfosuccinates, di-esters of sulfosuccinates and N-acyl sarcosinates. Preferred are anionic sulphate surfactants and anionic sulphonate surfactants, anionic carboxylate surfactants and anionic soap surfactants.

Particularly preferred are the anionic sulphonate surfactants such as linear or branched alkyl benzene sulphonates, alkyl ester sulphonates, primary or secondary alkyene sulphonates, olefin sulphonates, sulphonated polycarboxylic acids, alkyl glycerol sulphonates, fatty acyl glycerol sulphonates, fatty oleyl glycerol sulphonates and mixtures thereof.

Most preferably the anionic surfactant is a linear alkyl benzene sulphonate in which the alkyl chain has from 5 to 20 carbon atoms. The sodium and potassium salts are preferred. This type of surfactant provides particularly beneficial water distribution, re wetting and resaturation properties and also provides excellent re-saturation properties and does not lead to foaming problems in the irrigation water. Fast wetting and good hydroretentivity are provided, as well as retention of properties over time.

Preferably the alkyl chain length is in the range 8 to 16, and more preferably at least 90% of the chains are in the range 10 to 13 and more preferably at least 90% (by weight) are in the range 10 to 12.

Alternatively, the ionic surfactant may be cationic or zwitterionic. Examples of cationic surfactants include quaternary ammonium surfactants. These can, for instance, be selected from mono C6 to mono C16, preferably C6 to C10 N-alkyl or alkenyl ammonium surfactants wherein the remaining N positions are substituted by groups such as methyl, hydroxyethyl and hydroxypropyl.

Suitable zwitterionic surfactants include derivatives of secondary and tertiary amines, derivatives of heterocyclic secondary and tertiary amines, or derivatives of quaternary ammonium, quaternary phosphonium or tertiary sulphonium compounds. Betaine and sultaine surfactants are examples of zwitterionic surfactants.

The ionic surfactant is present in the growth substrate in amounts preferably from 0.01 to 3% (by weight), based on growth substrate, more preferably 0.05 to 1%, in particular, 0.075 to 0.5%.

Preferably the amount (by weight) of ionic surfactant based on the weight of binder (dry matter) is in the range 0.01 to 5%, preferably 0.5 to 4%.

It is preferred that there is substantially no other wetting agent than the ionic surfactant, and it is particularly preferred that there is no substantially other wetting agent than linear alkyl benzene sulphonate. Thus, levels of such other materials are preferably below 0.1 % (by weight) in particular below 0.01%, based on the growth substrate.

The growth substrate may contain other types of conventional additives in addition to binder and wetting agent, for instance salts such as ammonium sulphate and adhesion promoters such as silanes.

The mineral wool growth substrate can be made in broadly conventional manner. That is, it is made by providing solid mineral raw materials, melting these raw materials to form a melt and forming the melt into fibres, collecting the fibres as a primary web and consolidating the collected fibres. A binder is, conventionally, usually added by spraying a solution of binder components on to the fibres after formation but before collection and consolidation. In the invention the binder is usually a curable binder and is normally cured as the consolidated product passes through a curing oven. After this the product is cut into the desired sizes.

Curing is normally in an oven at a temperature of around 200°C or greater, often at least 220°C, for instance in the range of 220 to 260°C. Examples of suitable curing temperatures are 225, 240 and 250 degrees C.

Binder is usually applied to the fibres by spraying of a solution of the binder components in finely divided/atomised form.

The wetting agent is also generally applied to the fibres as an atomised/finely divided spray, usually as a solution or dispersion, but can be in neat form if the wetting agent is itself a liquid.

The wetting agent and binder may be applied to the fibres simultaneously or sequentially. If they are applied simultaneously, this may be as a result of spraying onto the fibres a single liquid composition which comprises both binder components and wetting agent, eg a solution in water or another appropriate solvent. Such a composition may, for instance, be produced before transport of the composition to the fibre production facility. Alternatively, the materials may be blended at the fibre production facility. As a further alternative they may be blended in-line just before spraying takes place.

Alternatively, the wetting agent and binder components may be applied separately but simultaneously to the fibres, as separate liquid compositions.

In general, application is usually by a spray into the spinning chamber into a cloud of the just-formed fibres. This results in distribution of the wetting agent on the surfaces of the fibres. Spraying can be by any conventional method, such as diffusers.

One particular advantage of using ionic surfactant, in particular anionic surfactant such as LAS, is that it appears to be stable to the curing conditions to which the growth substrate material is normally subject during production. Thus it can be sprayed onto the fibres together with other additives such as binder. The ionic surfactant is applied to the fibres after they are formed but before they are collected. This is usually by spraying in the spinning chamber.

The binder usually requires further additives, such as ammonia, ammonium sulphate and silane. These can be added to the binder before transport and storage, or at the fibre production facility before storage, or in-line shortly before spraying on of the binder to the fibres.

According to the invention we avoid application of a polyol to the fibres together with the wetting agent, in contrast to what is described in EP-1226749. Levels of polyol are thus below 0.1%, in particular below 0.01% (ie if there is any polyol applied to the fibres it is only as an accidental impurity in the components which are applied). Normally no polyol is detectable.

The fibres can be produced in any conventional manner, for instance by use of a rotor mounted for rotation about a vertical axis, such as the type commonly known as a spinning cup.

The invention is particularly beneficial in the context of processes where the fibres are produced by application of the mineral melt to one or more rotors which are mounted for rotation about a horizontal axis and which have a solid periphery onto which the melt ids applied and from which it is flung as fibres. The fibres are then carried away from the rotor as a cloud by an air stream, in a substantially horizontal direction.

Preferably the process involves at least two, preferably three or four, such rotors arranged so that fibres melt applied to the first rotor is flung from it partially as fibres which are carried away from the rotor and partially as melt onto the second rotor, on which more fibres are formed, and more melt is flung on to the subsequent rotor. Such systems are well-known for production of mineral wool products and are known as cascade spinners.

We find the invention especially beneficial in this system, which gives particular emission problems if the method according to EP-A-1226749 is followed. The problems encountered were rather surprising in view of the disclosure of EP-A-1226749, given that it teaches that polyol is evaporated in the curing oven. The curing oven is known to operate at highly elevated temperature. However, in the spinning chamber temperatures are not nearly so high but we observe very rapid evaporation of polyol nevertheless.

The product of the process of the invention can be used in a method of growing plants. The method may be any method of growing plants in a mineral wool substrate. These applications include germination of seedlings, propagation of cuttings, growth of plants in containers, freely planted cultures and sucking beds.

In all cases, it is a particular benefit of the growth substrates produced that they can be re-used. Thus, in the invention it is also possible to position the plants in a mineral wool growth substrate which has previously been used and wetted and allowed to dry out.

The growth substrate is preferably in the form of a consolidated unit. The mineral wool growth substrate may be in any integral form, for instance in the form of small blocks or plugs, larger blocks, or an extensive mat/slab/blanket. Dimensions may be selected as convenient. Each unit is generally a coherent matrix of mineral wool fibres, but can be formed by granulating a slab of mineral wool and consolidating the granulated material.

Each unit may have a variety of height, width and length dimensions, as conventional.

During the method the plants are irrigated with water and nutrients, as is conventional. The use of ionic surfactant has the advantage that loss of the wetting agent to the irrigation water is minimal, allowing for a system in which there is essentially no anti foam material in the irrigation water.

In use we find that the mineral wool growth substrate exhibits a particularly desirable distribution of water over height. This distribution can be determined by comparing the water content at the top of the substrate with the water content at the bottom of the substrate. Each of these values are usually expressed as percentages and the difference between them is preferably less than 45%, more preferably less than 35% and in particular less than 30%.

### Example:

An example of a process of the invention is as follows:
Mineral materials are melted in a cupola furnace to form a melt, which is then applied to the top rotor of a four-rotor cascade spinner in a spinning chamber. The melt is thus formed into fibres, which are carried away from the rotors as a cloud, towards a collecting belt, where they are collected as a primary web. The primary web is subsequently consolidated by cross-lapping and compression and passed through a curing oven, where it is subjected to a temperature of about 225 degrees C.
In the spinning chamber, binder solution and linear alkyl benzene sulphonate (LAS) anionic surfactant are applied to the cloud of fibres. This is done by pre-mixing the binder solution and LAS and supplying the blend to diffusers, from which it is sprayed on to the just-formed fibres. The blend comprises solvent for the binder components and LAS, and additives which are ammonia, ammonium sulphate and silane (but no polyol). During spraying the solvent evaporates in the spinning chamber. Any remaining solvent evaporates in the curing oven.
The amount and concentration of applied solution is chosen so as to provide a binder concentration, based on the final product, of 3% and an LAS concentration, also based on the final product, of 0.15%. The binder is phenol urea formaldehyde binder and is applied, as conventional, as components which then react and cure in the curing oven.

## Claims

1. A process of producing a mineral wool growth substrate comprising providing a charge of solid mineral material, melting the mineral material to form a melt, forming fibres from the melt and collecting the fibres as a primary web, and consolidating the primary web,
the process comprising applying to the fibres, after formation and before collection, binder and wetting agent, wherein the wetting agent comprises ionic surfactant,
**characterised in that** substantially no polyol is applied to the fibres after formation and before collection.

2. A process according to claim 1 in which the wetting agent comprises anionic surfactant.

3. A process according to claim 1 or claim 2 in which the wetting agent comprises linear alkyl benzene sulphonate anionic surfactant.

4. A process according to any preceding claim in which the wetting agent comprises no surfactant other than ionic surfactant.

5. A process according to any preceding claim in which fibres are formed by application of the melt to at least one rotor rotating about a horizontal axis and the fibres are flung from the surface of the rotor and carried in generally horizontal direction to a collection belt.

6. A process according to claim 5 in which the melt is applied to a cascade spinner.

7. A process according to any preceding claim in which the binder and ionic surfactant are applied to the fibres by spraying them simultaneously onto the fibres before collection.

8. A process according to any preceding claim in which the binder and ionic surfactant are applied to the fibres simultaneously as a blend comprising binder components and ionic surfactant.

9. A process according to any preceding claim comprising subjecting the consolidated primary web to elevated temperatures in order to cure the binder.
